# EUROPEAN PATENT SPECIFICATION

(11) **EP 3 264 947 B1**
(45) Date of publication and mention of the grant of the patent: **21.08.2019**
(21) Application number: 16722345.2
(22) Date of filing: 22.04.2016
(51) Int. Cl.: A47G 5/00, A47B 97/00

(54) **TILTABLE PRIVACY DESK-SCREEN ARRANGEMENT**
KIPPBARE SCHREIBTISCHBLENDENANORDNUNG FÜR PRIVATSPHÄRE
AGENCEMENT DE SÉPARATION DE BUREAU INCLINABLE

(30) Priority: 23.04.2015 GB 201506918
(43) Date of publication of application: 10.01.2018
(73) Proprietor: Mizere, Madeleine, Gloucestershire GL50 3BA (GB)
(72) Inventor: Mizere, Madeleine, Gloucestershire GL50 3BA (GB)
(74) Representative: Hocking, Adrian Niall
(86) International application number: PCT/GB2016/051138
(87) International publication number: WO 2016/170366

(56) References cited:
- BE-A- 556 485
- DE-U1- 20 319 139
- GB-A- 2 340 748

## Description

The present invention relates to the field of privacy screens and partitioning systems within the context of mainstream open plan workplace design, primarily but not necessarily exclusively taking into account personal well- being in conjunction with organisational culture and its implications on a functional and design related level.

### BACKGROUND TO THE INVENTION

In recent years overwhelming evidence on the disadvantages of open plan working environments have surfaced, backed by extensive literature and research.

It has been established that a certain degree of privacy in the workplace for the purposes of increased productivity and focus as well as to the reduction of stress to the individual is essential, whereas stress in particular has shown to be a major factor impacting negatively on productivity and health.

Furthermore, solitary work has been linked to maximisation of creative potential, an asset highly sought after in today's competitive, innovation driven industries.

On a personal level, a lack of control over one's immediate environment is yet another deciding factor that has been proven to impact negatively on individual wellbeing.

A further key development to be noted is that advances in information and communications technology have made face to face interactions and physical visibility less and less relevant as collaborative work and communication have increasingly transferred onto a virtual level.

Conversely, there are also recognised merits to open plan work spaces and the advantages and efficiency of teamwork are not be neglected.

When managed correctly, conditions that aid closeness and connectedness to other team members have been found to aid productivity and employee morale, which prove advantageous on an individual level as well as to an organisation as a whole.

Furthermore, too much seclusion, particularly noticeable in enclosed offices or areas equipped with excessive screening, even though addressing the question of privacy and distractions, can often be an undesirable solution due to visual disconnection or isolation of its users, whilst simultaneously connoting certain rigidity.

The conclusion in this context therefore is that a desirable office design solution should be a balanced and optimised combination of flexible provisions, which allow for both focused personal work as well as collaborative teamwork, whilst simultaneously tailoring for more individual influence on one's surrounding conditions in order to enable a notion of personal autonomy.

To this date numerous attempts have been made to find viable solutions in response to the listed considerations. Enclosed offices with breakout areas or flexible table arrangements for instance are often regarded as a desirable solution to the organisation of differing work environment related needs.

Other ideas also substantialised in variations of privacy screening installations with provisions for various displacements such as height adjustments, which may be fixed to a work surface or freestanding with possibilities to flexibly arrange in space. GB2340748 discloses a foldable screen having a plurality of tapering panels hinged at their narrow end, which are slidable relative to each other such that the screen is moveable between an extended condition and a retracted condition.

However, the fact that those solutions are not as widely utilised in today's predominantly open plan work places as may have been anticipated denotes that there may be obstacles to an extensive realisation of those measures. Instead, inclinations to adhere to already established systems, which may have become ineffective over time, appear to persist, leaving scope for scrutiny of the current proposals.

For the purpose of the present invention perceived reasons for the reluctance of both organisations as well as individuals to make a shift to the implementation of proposed novel systems may include the following.

On an organisational level, a lack of insight and crucial research into areas of social and occupational psychology as well as consideration of culturally determined factors in conjunction with their incorporation within workplace design, manifesting itself in: promotion of certain layouts and styles of mainstream workplace design, which are often coupled with established norms drawn from beliefs that are in contrast to researched findings and personal preferences; failure to recognise that considerable differences in individual temperament make it very unlikely for one universal workplace setting to fit all requirements; misinformed perceptions that visibility should be maintained at all times for supervision and teamwork purposes, although this has been often shown to be counterproductive; cautiousness towards unfamiliarity, which translates to the larger scale of organisations and their persisting ambiguity to change; and difficulties in the determination of cost-effectiveness and economic viability of new and often as complex perceived applications.

On a personal level, psychological and culturally determined factors often prevent individuals from utilising more flexible systems in a desired manner; pressures to perform in alignment with unique company specific and on a wider scale culturally established expectations may often hinder the individual's adaptation of novel provisions; peer pressure can often outweigh other motivators, whereas the objectives of an influencing group may often be in contrast to better suited work environment solutions on an individual level; and pursuit of socially conditioned visual and physical proximity can be in disagreement with individual, temperamentally determined needs for a specific surrounding.

From a design perspective, a shortage of clever design solutions more attuned with the individual user as well as with their effects on the immediate and wider surrounding is evident in: impracticality of many provisions, whereas the complexity of operation or effort required, for instance having to move from one area to another or having to relocate screening provisions in a laborious manner, often pose an obstacle to effective utilisation; a certain lack of fluency found within proposed systems, apparent in a static nature or restriction to one-dimensional movement, often makes utilisation somewhat choppy and unappealing; and insufficient visually engaging and hands-on design features, encouraging active and continuous interaction with current systems.

For the purpose of the present disclosure it is therefore deemed necessary to provide systems that take the described work place dynamics into account and are able to effectively manoeuvre within the given scope, maximising the positive impact on productivity and wellbeing of its users.

It is an object of the present invention to provide a tiltable privacy desk-screen arrangement which reduces or substantially obviates one or more of the above-mentioned problems.

### STATEMENTS OF INVENTION

According a first aspect of the invention there is provided a tiltable privacy desk-screen arrangement, comprising: a bracket assembly; a plurality of neighbouring screens pivotably engageable with the bracket assembly; a guide portion associated with each screen; a linkage member interconnecting the neighbouring screens at or adjacent to upper screen corner portions to permit pivotable movement of each said screen when a force (F) is applied to the linkage member; wherein a pivotable movement of each said screen is along a linear or substantially linear axis defined by the guide portion of each screen, and the tiltable privacy desk-screen arrangement further comprising a securing member associated with each guide portion, engageable with the bracket assembly to retain the screens in position. Such a force may be applied either directly to the linkage member, or indirectly via an interconnected part such as via an interconnected screen.

Advantageously, the invention provides for a plurality of screens that are pivotable laterally about their corresponding transverse axis of rotation, whilst maintaining an upright position.

The objective of the present invention is to introduce an improvement to currently employed privacy screen provisions in support of the organisation of flexible workplace environments, aiming to resolve the addressed issues with regards to versatility, manageability and feasibility whilst aiming to preserve the underlying structural balance of organisations through familiarity, tolerability and inclusivity. Beneficially, the proposed invention aims to improve upon the rigid formats currently in use, by introducing subtle but effective design alterations to work surface mounted systems that gently guide users to utilise them in their intended manner.

The tiltable privacy desk-screen arrangement provides that concurrently elevated and lowered portions of the plurality of interconnected screens may extend frontally and laterally above the work surface.

Preferably, the tiltable privacy desk-screen arrangement further comprises a desk, and the bracket assembly is mounted onto adjacent edges of the said desk or a work station. Alternatively, the bracket assembly may abut the edges of the desk.

The tiltable privacy desk-screen arrangement is generally suited to a workplace environment. By the bracket assembly being mounted onto adjacent edges of a desk or work station, the tiltable privacy desk-screen arrangement may be integral to one or more adjoining work stations or desks, where each desk or work station generally includes an elevated work surface. The bracket assembly may not be permanently fixed to the work station or desk, and may be portable and/or interchangeable, instead abutting the edges of the desk, allowing for the tiltable privacy desk-screen arrangement to be quickly and easily moved from one location to another. Preferably, the guide portion may be integrally formed as part of each screen. It may be feasible that each guide portion may define an axis which may be at least in part curved and/or arcuate, or include one or more detents or notches to allow each screen to hold or be locked or latched in a given position.

The guide portion is beneficial, in guiding the pivotable movement of each screen. It may be advantageous for the guide portion to be integrally formed as part of the screen, so as to slide across at least part of the bracket assembly. The guide portions of the individual screens assist in guiding the individual screens to move through a range of alternating rotational and translational movements in alignment with the respective work surface edges. Beneficially, the arrangement with the the securing member provides that the screens may be retained in their desired position.

The linkage member may interconnect two screens.

Advantageously, having the linkage member in such a form provides that the linkage member may be used where the screens extend along the rear edge and one of the lateral edges of a right angled work surface in an L-shaped configuration.

Alternatively, the linkage member may interconnect at least three screens.

If two work surfaces are arranged in a back-to-back configuration, the linkage member may thus be used to interconnect three screens extending between the rear edges and along two respective lateral edges in a T-shaped configuration of the screens. Such a linkage member may also be used if there is a side-by-side arrangement of two work surfaces, with three interconnected screens extending between the laterally abutting work surfaces and along both rear work surface edges, also resulting in a T-shaped configuration of the screens.

Further, the linkage member may interconnect at least four screens.

Advantageously, having the linkage member in such a form provides that the linkage member may be used where there are two diagonally arranged work surfaces, with four interconnected screens extending along the aligned rear and respective perpendicularly adjoining lateral work surface edge resulting into a cross-layout configuration.

Advantageously, other configurations may be implemented as desired with the possibility to be managed by a number of users of affected adjoining work stations.

Further, whilst in all of the situations described, various degrees of collaboration between individual users of each work surface is required, hands-on design elements and a playful manner of operation encourage the active and spontaneous interaction with the current system, further supporting a notion of increased autonomy to the individual, whilst catering for an overall more stimulating and engaging work environment.

Each screen may preferably, be connected to the linkage member via a pivot joint portion. Further, each screen may act as a lever so as to be capable of pivoting about the pivot joint portion.

The tiltable privacy desk-screen arrangement may further comprise a plurality of pivot joints, the pivot joints facilitating the pivotable movement of the screens. Preferably, the exertion of force on at least one pivot joint of each screen causes displacement of said screen about its pivot joint portion. Furthermore, the displacement of each screen may simultaneously displace every other interconnected screen about each said pivot joint portion. This is advantageous, since if an output force is applied upon an actuating lever portion, which may either be a portion inherent to the screen or part of an externally linked component, this will cause the interconnected screens to describe rotational movement about a plurality of linkage inherent pivot joints, which may be fixed or moving. A plurality of tilted positions of the individual screens may be obtained via said pivotable movement. Further, the tilted positions may encompass at least one set of elevated and one set of lowered portions of said individual screens. Preferably, alternative tilted positions of the individual screens may be attained by re-exertion of force being applied to the linkage member. Again, such a force may be applied either directly to the linkage member, or indirectly via an interconnected part, such as via at least one of the interconnected screens.

According to an aspect not in accordance with the invention there is provided a tiltable privacy desk-screen arrangement comprising: a bracket assembly mountable to adjacent edges of a desk; a plurality of screens engageable with the bracket assembly, each screen including a guide portion formed therein; a securing member associated with each guide portion and which is engageable with the bracket assembly to retain the screens in position; and a linkage member interconnecting the screens at or adjacent to respective upper screen corner portions to permit pivotable movement of each said screen along a linear or substantially linear axis defined by the guide portion of each screen when a force is applied to the linkage member.

Generally, the screen displacements may be regulated via a plurality of lever portions extending between the pivot joints and points at which force may be exerted.

Lever portions may be integrated parts of interlinked screen portions. Additionally and/or alternatively levers may be incorporated in additional components of the tiltable privacy desk-screen arrangement.

Typically the lever mechanism works in a mode in which, should an input force act upon an actuating lever portion of screen, displacement of the affected screen is instigated, whereas interlinked levers simultaneously perform a coinciding action on interlinked screen portions, reflecting the movement of the input force. This may be redirected via additional elements inherent in the tiltable privacy desk-screen arrangement. As a result adjacent inner screen portions may be jointly raised or lowered as they rotate about the pivot joints, while adjoining outer screen portions may simultaneously describe a counter movement in the opposite direction.

Despite some resembling aspects of the present disclosure to current systems, which is beneficial for assimilating the invention into an existing workplace environment, a significant number of distinct innovative differences are being introduced therein.

One aspect is the fluctuating nature of visibility of the present disclosure facilitated through alternating tilted screen positions.

In an exemplary embodiment comprising a combination of two or more typically perpendicularly arranged individual screens, transition from one tilted positions to another may be administered via the linkage member. The resulting displacements characterised by a tilted configuration of the individual screens may generally be constrained perpendicularly to the work surface parallel to the corresponding work surface edge via the linkage member and/or other components.

Typically in one end position or lowered condition at which the inner screen portions abut and are therefore perpendicular or substantially perpendicular, preferably with at least one substantial part of the screen area situated above eye level, the respective outer screen portions are lowered, preferably with another equally sized screen area situated below eye level, providing an enclosure and increased privacy to the central areas of the arrangement. In an alternate end position the outer screen portions of each screen are raised and therefore offset from the vertical and the inner screen portions are lowered, also being offset from the vertical, opening up the central areas whilst providing less visual exposure to the distal ends of the screen assembly.

Due to the interchangeability of tilted arrangements various types of viewpoints can be created at any one time.

Depending on each individual setting, at the higher ends of the spectrum pockets of enclosure are created, achieving comparatively high levels of privacy through optimisation of obstructed views, whilst at the lower ends diverse gaps and niches formed in the arrangement aid to visually break up the space in order to effectively maintain an adequate level of visibility at all times.

With the flexibility for variable exposure related configurations, allowing for instantaneous switching between relative enclosure and relative openness, whilst simultaneously maintaining a notion that combines aspects of both, a more effective and more commonly agreeable workplace environment can be created therein.

Another distinguishing aspect is the optimised functional adaptation of the present disclosure through self-regulatory interconnectivity.

Typically, functioning of the tiltable privacy desk-screen arrangement can only be sustained when each screen is connected to another, via the linkage member, whereas optimised weight distribution of all interconnected screens could be one method aiding to achieve balanced states of the interconnected screens.

Generally, individual screens may be mounted onto a bracket assembly including a set of pivot joints for rotary screen displacement. The individual screens may further interlink via a linkage member incorporating another set of pivot joints, similarly allowing for rotary screen displacement.

With the frontal as well as the lateral coverage provided through multiple interconnected screens, a higher initial level of privacy provision and overall increased effectiveness subsequently emerges.

Visual complexity reflected in the present disclosure resulting from collectively diverse screen positions and configurations is a further defining aspect.

As it is impossible to regulate one isolated viewpoint configuration at any one time without influencing another, the individual user is presented with a choice to visually and spatially prioritise their privacy needs to their frontal versus their lateral side in an unobtrusive manner.

In the context of a conglomeration of privacy screen arrangements with a multitude of screening combinations and configurations a much more subtle way of space manipulation arises therein.

Furthermore, the subsequent vast array of appearances and feels can further contribute to the loosening up of space, which may support the dismantlement of rigid and monotone structures.

Yet another distinguishing aspect is the operational fluency of the present disclosure generated through self-reinforcing processes.

The various rotary motions that support the described screen displacements enable seamless and gentle transitions between alternate configurative states of the screen assembly, formed by the individual screens. To perform simultaneous tilting of individual screens, there may be a requirement for further components that facilitate additional scope for desired screen displacement.

The facilitation of translational motion may be achieved through mobility of the pivot joints enabling them to move along designated guide paths, causing the rotary movement of each screen to linearly, or substantially linearly, offset in alignment with the respective abutting work surface edge.

In one embodiment translational movement may be facilitated via a set linear motion path of the pivotable joint member along the stationary guide portion, wherein during operation rotary screen movement about the respective pivot joints displaces the individual screen vertically within the scope of given constraints, redirecting into a horizontal direction via elements of the stationary guide portion.

It will be appreciated that the pivoting of the individual screens may be achieved by altering the configuration of the components. For example, the redirection may be achieved via slidably articulated pivot joints. In an alternative embodiment, there may be a stationary bracket assembly and a mobile screen assembly formed of individual screens, where pivoting is achieved by an integral mobile screen guide portion sliding across a pivot joint portion of the stationary bracket assembly. In a further embodiment a pivot joint portion of a mobile or movable screen may be rotatably and slidably received by a guide portion of the stationary bracket assembly. Depending on the respective starting positions in both cases individual screens simultaneously move in an inwardly or outwardly offsetting tilting motion therein as they rotate about a plurality of mobile pivot joints.

The nature of the movement resulting from the described collective screen displacements is of a smooth swinging and gliding composition that in other embodiments may also be facilitated via alternative linkage configurations. The described transition method may be further supported by an optimised weight distribution, wherein the screens glide into an end position of equilibrium without additional force impact once sufficient impetus has been generated.

As the required input effort is minimised through a fluent and self-stabilising system increased practicality and user-friendly operation emerges therein.

In this context, another defining aspect is encouragement for interaction with the present disclosure through hands-on functional features.

For example, the tilted configuration of an individual screen resting on a centrally disposed pivotable joint makes it visually apparent that it is any one elevated screen portion that needs to be pushed down in order to achieve an alternate position.

Comparable operational mechanisms are evident through the layout of the tiltable privacy desk-screen arrangement and visual clues bearing similarities with systems that most people are familiar with simplify the engagement of the individual user with the arrangement therein.

Users of adjoining work stations may further have the possibility to collectively operate adjacent screen assemblies.

A further advantage of the present disclosure is its relatedness to established systems through familiarity in visual style.

Whilst generally the screen panels may be flat, or substantially flat, it will be appreciated that other configurations are possible and the screen panels may instead be undulating, or include further apparatus, such as shelving attached to them. Further, the screen panels may be rectangular, or substantially rectangular, although these may instead be any regular or irregular polygon or quadrilateral shape. If the screen panels are generally flat and rectangular, or substantially rectangular, their arrangement around and above perpendicularly aligned work surface edges bear similarities to commonly utilised work surface mounted screening provisions.

With the prospect of seamless integration into a typical work environment the suitability and applicability of the present disclosure is maximised therein.

A concluding advantageous aspect of the present disclosure is its viability through an overall low complexity composition and application.

The present disclosure typically benefits from low count, low quantity materials in conjunction with a low complexity makeup and a for its operation advantageous lightweight composition, whereas in an exemplary embodiment the assembly procedure may be carried out in few simple steps, preferably requiring no tools by utilising simple tension and snap-fit type mounting and securing methods.

These economically influenced considerations make the present disclosure an attractive alternative to at present more commonly utilised provisions.

In summary, the described enhancements inherent within the present disclosure support and reinforce positive aspects in many facets.

The invention will now be more particularly described, by way of example only, with reference to the accompanying drawings.

### BRIEF DESCRIPTION OF THE DRAWINGS

FIG.1 is a perspective front view of one embodiment of a tiltable privacy desk-screen arrangement, illustrating a first position of the tiltable privacy desk-screen arrangement, including a screen assembly having two interconnected mobile or movable screens and mounted to the left hand side rear corner of a work surface via a bracket assembly;
FIG.2 is an exploded view of the screen assembly of FIG. 1, illustrating a linkage member and pivot joint portions of the screens;
FIG.3 is an exploded view of the bracket assembly of FIG.1, detailing individual elements relevant to its structural composition;
FIG.4 is a perspective rear view of the tiltable privacy desk-screen arrangement of FIG. 1, illustrating a second position of the tiltable privacy desk-screen arrangement and exemplifying a screen displacement which may be achieved through the application of force to the linkage member;
FIG.5 is a front view of the screen assembly of FIG.1, showing a frontal screen and detailing elements relevant to its lever mechanism;
FIG.6 is side view of the screen assembly of FIG.1, showing a lateral screen and detailing elements relevant to its lever mechanism;
FIG.7 is a top view of a second embodiment of a tiltable privacy desk-screen arrangement, illustrating a screen assembly having two interconnected movable screens mounted to the right hand side rear corner of a work surface;
FIG.8 is an enlarged perspective view of the bracket assembly shown in FIG. 10;
FIG.9 is a view from below of the linkage member of FIG. 10;
FIG.10 is a perspective view of a third embodiment of a tiltable privacy desk-screen arrangement, illustrating three interconnected movable screens mounted to two work surfaces, configured in a back-to-back arrangement; and
FIG.11 is a perspective view of a fourth embodiment of a tiltable privacy desk-screen arrangement, illustrating four interconnected movable screens mounted to four work surfaces.

### DETAILED DESCRIPTION OF PREFERRED EMBODIMENTS

The following exemplary embodiments serve to further detail various implementations of the present invention, whereas corresponding reference characters indicate corresponding parts throughout the listed views.

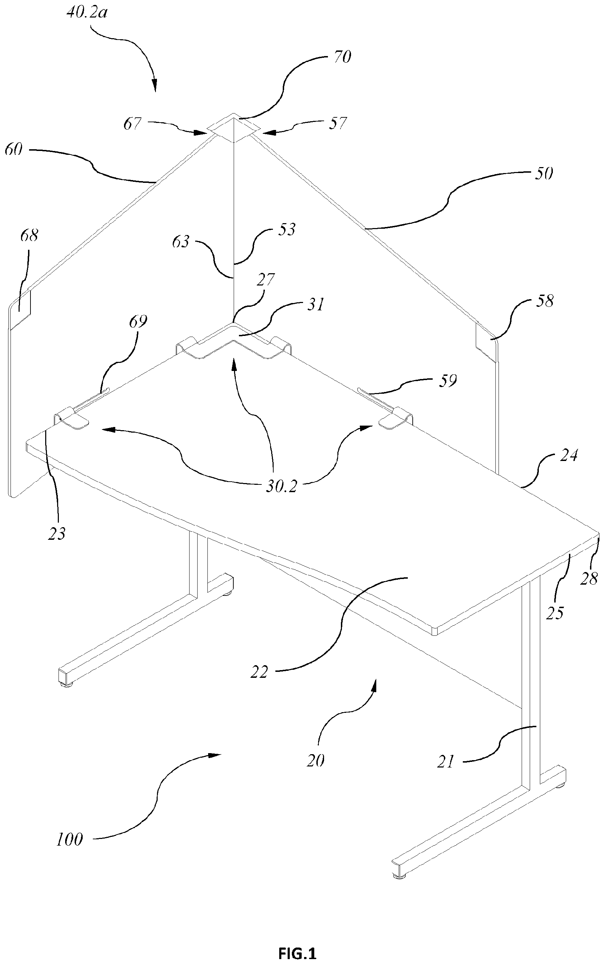

Referring firstly to FIG.1 to FIG.6 of the drawings, there is shown a first embodiment of a tiltable privacy desk-screen arrangement 100. The tiltable privacy desk-screen arrangement may be mounted to a work station, or desk assembly 20 as shown in the drawings. Additionally and/or alternatively, the tiltable privacy desk-screen arrangement may abut the edge of the desk assembly 20.

The desk 20 may have a tiltable privacy desk-screen arrangement 100 and a seating provision suitable for at least one person and may be free-standing or adjacent to other work stations or desk assemblies 20.

In this embodiment, the desk assembly 20 may comprise a table frame assembly 21, right-angled work surface 22 with an overhanging left hand side lateral edge 23, rear edge 24 and right hand side lateral edge 25. It will be appreciated that other configurations of the desk assembly are clearly possible and that the desk or work station should not be limited to any particular design, configuration or embodiment. For example, the desk may have a left hand angled work surface, or be rectangular, or substantially rectangular in shape. Other polygonal and/or quadrilateral shapes may also be considered, as necessity dictates.

The tiltable privacy desk-screen arrangement 100 has a bracket assembly 30.2. In this embodiment, the bracket assembly 30.2 is mounted to adjacent edges 23, 24 of the desk 20 and includes a bracket frame member 31, first and second pivotable or pivot joint members 39, and first and second securing members 34.

A plurality of rigid upstanding pivotable screens 50, 60, are engageable with the bracket assembly 30.2. In this embodiment, the bracket assembly interconnects a screen assembly 40.2a, which here includes frontal screen 50, and lateral screen 60, to the desk 20.

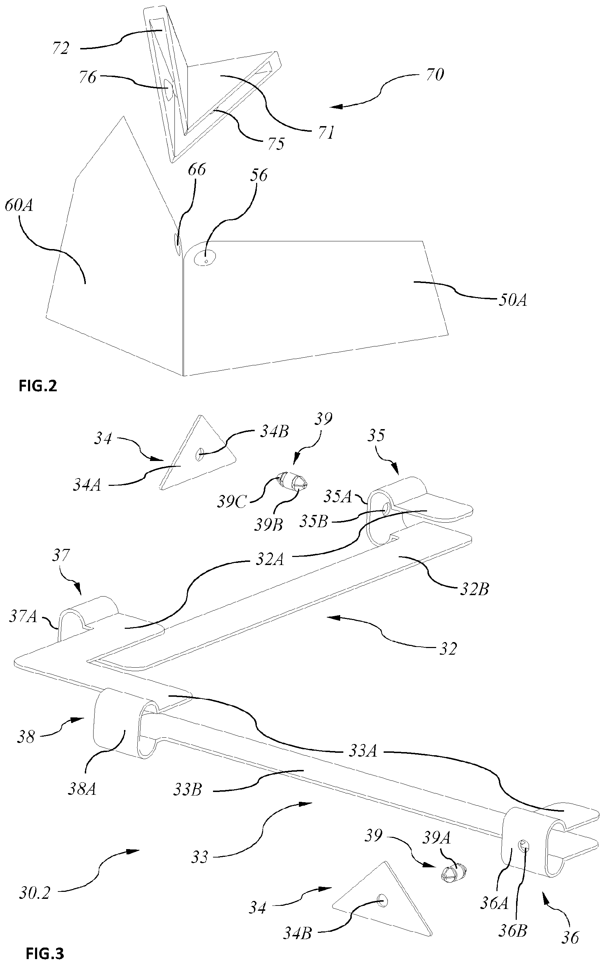

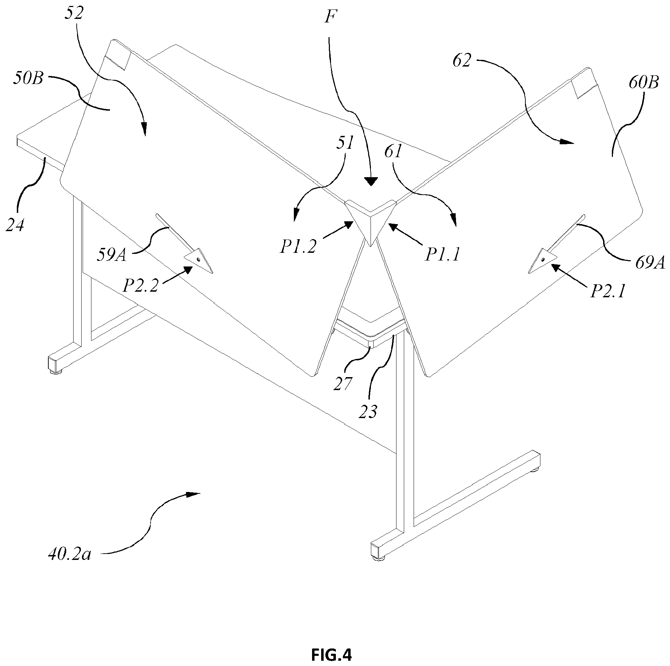

The frontal screen 50 and lateral screen 60 are interconnected by a flexible linkage, interconnecting linking portion, linkage element or linkage member 70 at adjacent upper screen portions 57, 67 to permit pivotable movement of each screen when a force F is applied to the linkage member. The linkage member 70 is connected to the frontal and lateral screens 50, 60 via pivot joint portions 75, 76 of the linkage member 70 and pivot joint portions 56, 66 of the frontal and lateral screens 50, 60, as best illustrated in FIG.3. This interconnection forms pivot joints P1.1, P1.2, as illustrated in FIG.4. Further pivot joints are formed at P2.1, P2.2 on screen surfaces 50B, 60B located at the rear of the tiltable privacy desk-screen arrangement.

Whilst in this embodiment, the linkage member or linkage element is unitarily formed as one part, the linkage member or linkage element may instead be formed from more than one interconnected part. Similarly, whilst in the current embodiment, the linkage member or linkage element is a rigid, or substantially rigid part, interconnecting the frontal and lateral screens, the linkage member may instead be formed from interconnected parts, capable of hinging or pivoting between the interconnected parts.

It will also be appreciated that a force does not need to be applied directly to the linkage member to permit pivotable movement of the sceens. Instead the force may be applied to the linkage member or element indirectly. For example, a force may be applied to an interconnected part, such as the interconnected screens, causing a force to be indirectly applied to the linkage member or linkage element so as to permit pivotable movement of the screens.

Inner lever portions L51, L61 are formed between pivot joint portions P1.1, P1.2 and further pivot joint portions P2.1, P2.2 and outer lever portions L52, L62 are formed between further pivot joint portions P2.1, P2.2 and outer screen corners 58, 68.

In the current embodiment the bracket assembly 30.2 is stationary and the screen assembly 40.2a is mobile or movable.

Referring to FIG.1 a first position of the screen assembly 40.2a is shown, where the frontal screen 50 is longitudinally disposed along the rear edge 24 of the desk 20, and the lateral screen 60 is longitudinally disposed along the perpendicularly adjoining left hand side lateral edge 23. The frontal and lateral screens 50, 60 are aligned perpendicularly to the work surface 22 with abutting inner screen edges 53, 63 in vertical alignment with a work surface edge 27.

In this embodiment, the frontal screen 50 and lateral screen 60 are, or are substantially rectangular and sized depending on the desired area to be blocked from view of a user. The frontal and lateral screens extend above the work surface 22.

It will be appreciated that other configurations of the screens are clearly possible and that the screens should not be limited to any particular design, configuration or embodiment. For example the frontal and lateral screens may be of the same, or substantially the same, size and shape, or this may vary. Further, the screens may not be rectangular, or substantially rectangular in shape and may instead be any regular, or irregular polygon or quadrilateral. Additionally and/or alternatively, whilst in the drawings, the screens are depicted as being flat, or substantially flat, this need not be the case, the screens may undulate, or have apparatus such as shelving connected to them.

Referring to FIG.4, it can be seen that a higher level of privacy may be achieved towards the central area the tiltable privacy desk-screen arrangement 100, wherein an elevated inner screen portion 51 and an elevated inner screen portion 61 create a centrally situated enclosed area at the abutting inner screen edges 53, 63.

Adjoining outer screen portions 52, 62 and respective upper outer screen corners 58 , 68 may be lowered, so as to maintain a two way partial visibility to both users of the desk assembly 20 and users of the surrounding area therein.

The tiltable privacy desk-screen arrangement 100 may be primarily managed by the user of the desk assembly 20, but also incorporates the possibility to be operated by users of adjoining work stations.

FIG.2 and FIG.3 detail elements of this embodiment of the tiltable privacy desk-screen arrangement 100 relevant to assembly and operation of the tiltable privacy desk-screen arrangement 100.

To assemble the tiltable privacy desk-screen arrangement 100 to a desk assembly 20, it is necessary to mount the bracket assembly 30.2 onto the desk assembly 20, wherein the bracket frame member 31 is secured or connected to work surface 22 via a tension-fit type securing method, thus allowing for a certain degree of adjustment with regards to variable worktop thicknesses.

A clamping portion 32 of the bracket assembly 30.2 clamps onto the rear edge 24 of the desk assembly 20 and a perpendicularly, or substantially perpendicularly, aligned clamping portion 33 clamps onto the left hand side edge 23.

The bracket assembly 30.2 further comprises an upper clamping portion 32A and a lower clamping portion 32B joined by connecting portions 35, 37. Each connecting portion 35, 37 has an upper and lower arched portion linked by respective screen abutting portion 35A, 37A, stretching around a thickness of the rear edge 24. Upper clamping portion 33A and lower clamping portion 33B are joined by connecting portions 36, 38, and have an upper and lower arched portion linked by respective screen abutting portion 36A, 38A, stretching around a thickness of the left hand side lateral edge 23.

In alternative embodiments, the bracket assembly may mount and/or connect to the work surface via additional and/or alternative securing methods. Further, it will be appreciated that it is not necessary for the bracket assembly to mount the work surface of the desk assembly and, the bracket assembly may instead abut the edges, or seat upon, the desk assembly.

The screen assembly 40.2a, which in this embodiment comprises frontal and lateral screens 50, 60 may be connected to or mounted on the bracket assembly 30.2 utilising, for example, a pin-slot-joint type linking method. The bracket frame member 31 facilitates the securing of first and second pivot joint members 39 with the axes of the pivot joint members 39 extending perpendicularly from screen abutting portion 35A, 36A in parallel, or substantially parallel, alignment with work surface 22.

As illustrated in FIG.3 an exemplary snap-fit type securing method may be utilised, wherein an engagement portion 39B of each pivot joint member 39 may engage with corresponding engagement portions 35B and 36B of bracket frame member 31.

In alternative embodiments each pivot joint member may be secured to the bracket frame member utilising alternative securing methods and may be fixed or removable components.

Furthermore, pivot joint members may be non-rotatable. Alternatively, pivot joint members may be freely rotatable, allowing for alternative operating mechanisms of the tiltable privacy desk-screen arrangement.

In this embodiment, frontal and lateral guide portions 59, 69 are associated with each screen 50, 60. The guide portions 59, 69 may further be integrally formed as part of each screen 50, 60. The frontal guide portion 59 longitudinally slots into the frontal screen 50, flexibly, movably, or rotatably mounting onto the first pivot joint member 39 accommodating a clearance for free movement. A screen surface 50A contacts screen abutting portions 35A and 37A of bracket frame member 31. The lateral guide portion 69 is congruent to the frontal guide portion 59 and longitudinally slots into the lateral screen 60, flexibly, moveably, or rotatably mounting onto the second pivot joint member 39 with screen surface 60A contacting screen abutting portions 36A and 38A.

It will be appreciated that the configurations of the frontal and lateral guide portions 59, 69 may be varied, depending on the desired extent of screen displacement required by the user. Further, whilst in this embodiment, the guide potion is movable, the guide portion may instead be fixed along, for example, the edge of the work surface with a corresponding movable pivot member being fixed to each screen. In such an embodiment, the pivot member may be held in position by vertical portions of the guide portion, so as to enable the pivot to travel along the guide portion, the guide portion acting as a runner for the pivot to move along to achieve a corresponding movement of the screen.

In the current embodiment, as a pivot joint member abutting surface 59A of the frontal guide portion 59 tangentially contacts a guide portion abutting surface 39A of the first pivot joint member 39 and a pivot joint member abutting surface 69A of the lateral guide portion 69 tangentially contacts a guide portion abutting surface 39A of the second pivot joint member 39 a rotary and linear association between the bracket assembly 30.2 and the screen assembly 40.2a is formed.

In alternative embodiments, it will be appreciated that the frontal screen 50 and lateral screen 60 may flexibly, moveably, or rotatably mount onto the bracket assembly 30.2 via alternative methods of connection.

In this embodiment, the tiltable privacy desk-screen arrangement further comprises a securing member 34 associated with each guide portion 59, 69. The frontal screen 50 and lateral screen 60 are locked into a position by first and second securing members 34 with screen abutting surfaces 34A extending beyond the height of corresponding guide portions 59, 69 allowing for displacement parallel to respective work surface edge 23, 24.

It will be appreciated that the securing member need not be a separate component as shown in the drawings. Instead, the securing member may be integrally formed by means of a groove or channel within the screen, in alignment with the guide portion, so as to hold the pivot in positions, using vertical edges to secure or retain the pivot in the channel. Alternatively, the securing member may be integrally formed as part of the bracket, or indeed be fixedly rotatably coupled to the pivot.

Engagement portions 34B engage with engagement portion 39C of respective first and second pivot joint member 39 therein, utilising the previously described snap-fit type securing method, with respective screen abutting surfaces 34A contacting corresponding screen surfaces 50B, 60B.

In further embodiments frontal screen 50 and lateral screen 60 may be flexibly secured via alternative securing means. For example, the frontal lateral screens 50, 60 may be rotatably coupled utilising a ball-and-socket type linking method configured to allow for vertically displacing rotary screen movement in alignment with the work surface corner 27.

The linkage member 70 rotatably mounts onto adjoining inner screen portions 51, 61 via a snap-fit-type securing method, wherein oppositely disposed half-spherically protruded pivot joint portions 75, 76 integral to respective link portion 71, 72 rotatably mate with corresponding oppositely disposed half-spherically recessed pivot joint portions 56, 66 integral to inner screen corners 57, 67, enabling a rotary association to form between the individual screens 50, 60.

It will be appreciated that the further methods to rotatably interlink individual screens may be employed, for example, using a pin connection.

FIG.4 illustrates a second position of the tiltable privacy desk-screen arrangement 100, wherein frontal screen 50 and lateral screen 60 have been displaced in alignment with respective work surface edges 23, 24.

This second position can be achieved through the exertion of force F onto linkage member 70, instigating simultaneous screen displacement that may be described as offsetting, tilting or a swinging movement, vertically and horizontally displacing the individual screens 50, 60.

Pivot joints P1.1, P1.2 may rotatably articulate at the contacting points of respective pivot joint portions 75, 76 with corresponding pivot joint portions 56, 66. Further pivot joints P2.1, P2.2 are further rotatably and slidably articulated at the contacting points of respective guide portions 59, 69 with corresponding first and second pivot joint members 39, wherein respective pivot axes extend horizontally between the screens' 50, 60 inner and outer faces in alignment with work surface 22.

Whilst in motion pivot joints P1.1, P1.2 move in alignment with the work surface corner 27 as coupled components of the linkage member 70 and corresponding rotatable and slidable frontal and lateral screens 50, 60, wherein the freely rotatable pivot joint portions 56, 66 rotate about corresponding vertically constrained pivot joint portion 75, 76. Simultaneously, further pivot joints P2.1, P2.2 travel horizontally relative to the respective linear axes of the guide portions 59, 69 as linked components of the fixed pivot joint member 39 and corresponding rotatable and slidable frontal screen 50 and lateral screen 60, wherein respective pivotable joint abutting surface 59A, 69A tilts about and slides across corresponding tangentially abutting guide portion abutting surfaces 39B.

The combined linear and rotary movement of the inherent components of the tiltable privacy desk-screen arrangement 100 described above drives the collective displacement of the screens 50, 60. The screens 50, 60 may have a horizontally offsetting tilting movement and a vertically offsetting rotary movement about the linkage member 70, wherein previously elevated inner screen portions 51, 61 have moved downwards and previously lowered outer screen portions 52, 62 have moved upwards whilst offsetting outwardly towards the work surface edge 27.Whilst in this embodiment, the screens interconnect to pivot simultaneously, it will be appreciated that the screens may instead pivot independently of each other should the position of the pivot and the guide portion be altered. Here, whilst the linkage member may still be used to connect the screens to each other, it would comprise separate flexible portions, each portion being connected to only one screen only in order to achieve independent movement of each screen.

Generally, the extent of screen displacement will be variable depending on the overall configuration of components inherent in the tiltable privacy desk-screen arrangement 100.

In the current embodiment a state of equilibrium may be achieved once either a first position as illustrated in FIG.1 or a second position, as illustrated in FIG.4 has been reached, further supported by the mechanical advantage achieved by the tiltable privacy desk-screen arrangement 100 as the weight of the individual screens 50, 60 shifts to either side of the loadbearing pivot joint member 39.

It will be appreciated that additional stabilising aids as well as provisions for intermediate positions, for example utilising friction, notches, or stops, may be utilised so that the tiltable privacy desk-screen arrangement may attain a range of different positions.

As illustrated in FIG.4, privacy increases by the previously more exposed outer lateral side and outer frontal side of screen assembly 40.2a, whilst in the central areas privacy is reduced through lowering of inner screens portions 51, 61 as well as through a gap created between adjoining inner screen edges 53, 63.

To return to the first position of FIG.1, force F needs to act upon either outer screen corner 58 or 68, causing both screens to describe the above detailed motions in reversed order.

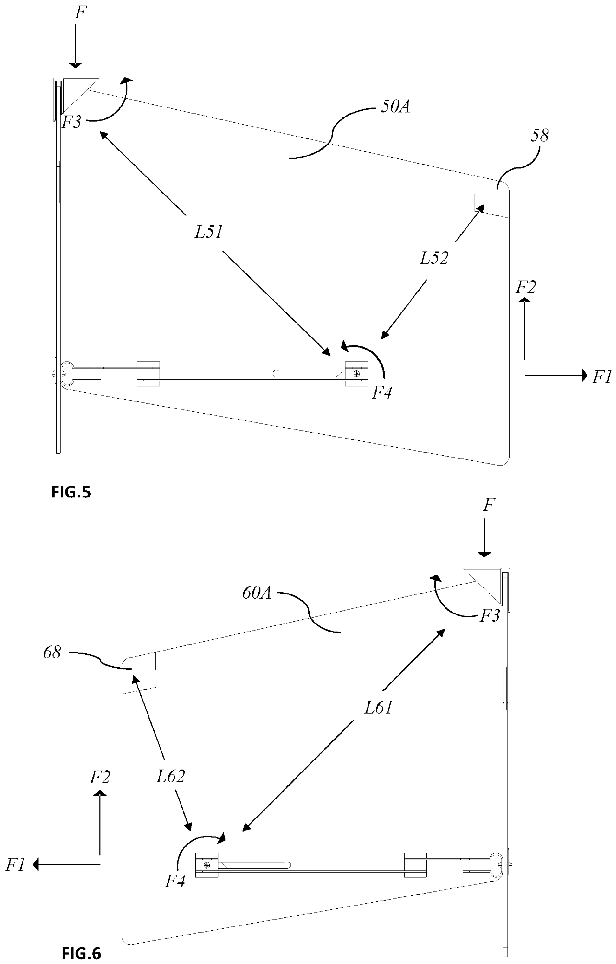

FIG.5 and FIG.6 further outline the mechanism and forces actuating the previously described screen displacements.

In the current embodiment the screens 50, 60 act as levers, operating about the linkage element 70 at the exertion of force F onto actuating lever portions, where lever functions are assigned to screen portions disposed between force impacted portions and pivot joints P1. 1, P1.2.

As the movement range of each screen is predetermined the scope, the levers can operate in may be constrained parallelly to the work surface edges 23, 24.

Referring firstly to the frontal screen 50, as best illustrated in FIG.5, lever portions L51, L52 extend between the further pivot joint P2.1 and diagonally aligned pivot joint P1.1 and between the further pivot joint P2.1 and the outer screen corner 58. Referring to the lateral screen 60, as best illustrated in FIG.6, lever portions L61, L62 extend between the respective positions of further pivot joint P2.2 and diagonally aligned pivot joint P1.2, and further pivot joint P2.2 and the outer screen corner 68, respectively.

Based on a first position, illustrated in FIG.1, at the instance of force F exerting a push action onto linkage member 70, which, through its interconnectivity with frontal and lateral inner screen portions 51, 61 incorporates a combined link, lever and pivot function, interlinked actuating lever portions L51, L61 simultaneously push adjoined frontal and lateral inner screen portions 51, 61 downwards and outwards and frontal and lateral outer screen portions 52, 62 upwards and outwards about the respective positions of affected pivot joints along the previously described linear guide paths.

Based on a second position, illustrated in FIG.4, at the instance of force F exerting a push action onto either frontal or lateral outer screen corner 58, 68, actuating lever portions L52, L62 push respective frontal and lateral outer screen portions 52, 62 downwards and inwards, wherein on the interlinked screen 50, 60, a pull action via respective interlinked lever portions L51, L61 pulls respective frontal and lateral inner screen portions 51, 61 upwards and inwards reflecting the movement of the actuating screen, hence executing the previously described displacements in reversed order.

Further referring to FIG.5 and FIG.6 the force distribution at the exertion of force F onto either actuating lever portion occurs as follows.

Input force F converts into a combination of rotational and translational output forces. The vertical downward pointing vector of force F deflects into a horizontal outward and inward pointing vector of force F1 and vertical upward pointing vector of force F2, in alignment with the respective positions of the pivot joints. The transitions between vertical and horizontal movement are facilitated by torque F3 occurring about the axes of pivot joints P1.1, P1.2, and torque F4 occurring about the axes of further pivot joints P2.1, P2.2.

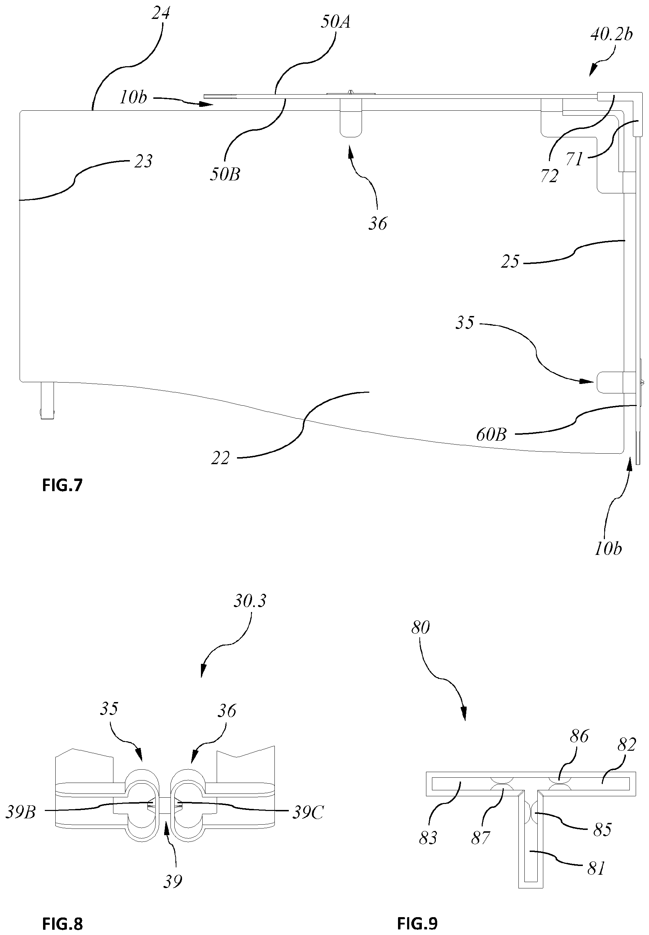

FIG.7 illustrates a second embodiment of the tiltable privacy screen 100. Features which are similar or identical to those in the first embodiment are given similar or identical references and further detailed description has been omitted, for brevity. In this embodiment, the bracket assembly 30.2 and double screen assembly 40.2b mount onto the opposite rear corner 28 of work surface 22.

In comparison with the first embodiment of the tiltable privacy desk-screen arrangement 100, the bracket assembly 30.2 has horizontally rotated 90 degrees clockwise, such that the clamping portion 32 now clamps onto the right hand side lateral edge 25 and the clamping portion 33 clamps onto the rear edge 24. Furthermore, the frontal screen 50 and the lateral screen 60 have changed their orientation with frontal screen surface 50B parallel abutting screen abutting portions 36A, 38A of bracket frame member 31 and lateral screen surface 60B parallelly abutting screen abutting portions 35A, 37A.

In the current configuration assembly procedures of corresponding parts and motion principles at the exertion of force F are mirrored from the previously detailed first configuration of tiltable privacy desk-screen arrangement 100.

FIG.7 further illustrates a clearance cavity 10b extending between respective frontal and lateral screen surfaces 50B and 60B and corresponding work surface edge 24, 25, which may be used, for example, for the wiring or mounting of alternate items.

Referring to FIG.1 and FIG.4 a corresponding clearance cavity extends between frontal and lateral inward facing screen surfaces 50A, 60A and corresponding work surface edges 24, 23.

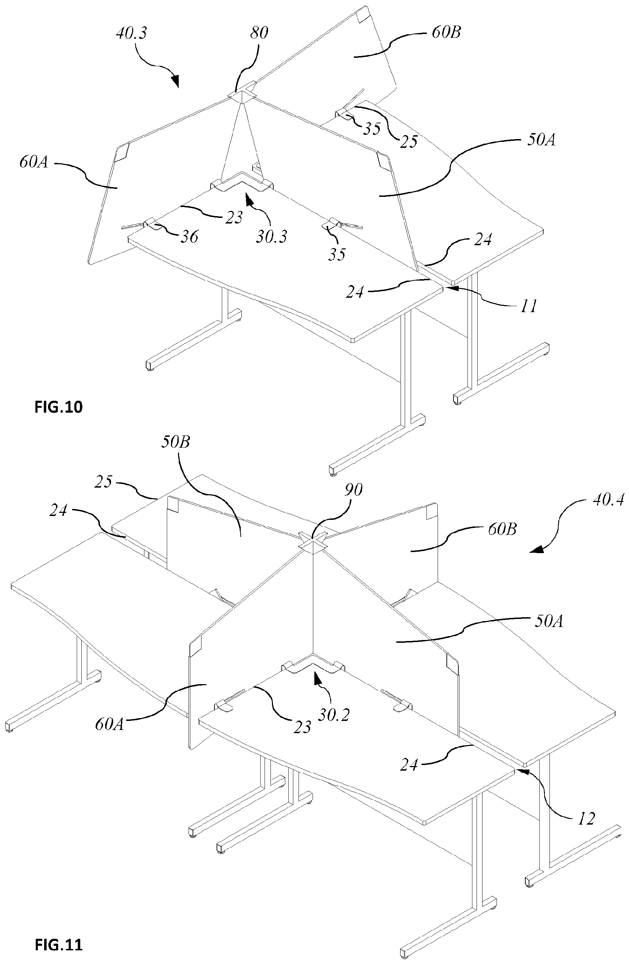

FIG.10 illustrates a third embodiment of a tiltable privacy desk-screen arrangement 100 Features which are similar or identical to those in the first embodiment are given similar or identical references and further detailed description has been omitted, for brevity. In this embodiment, the screen assembly 40.3 comprises three interconnected screens.

In FIG.10, the work assembly comprises two desks or table assemblies 20 in a back to back configuration. There is a gap, or bracket receiving cavity 11 between the rear edges 24 of the two desks or table assemblies 20.

The bracket assembly 30.3, includes first and second bracket frame members 31, first, second and third pivot joint members 39, and first and second securing members 34.

The screen assembly 40.3 includes frontal screen 50, and first and second lateral screens 60. The linkage member 80 interconnects the frontal and first and second lateral screens 50, 60;

All elements are to be assembled in a similar fashion to the assembly methods relating to the first embodiment of the tiltable privacy desk-screen arrangement 100.

Referring to FIG.10 a corresponding second position similar to that illustrated in FIG.4 is shown, wherein adjacent rear edges 24 of front facing first table assembly 20 and back facing second table assembly 20 are parallelly spaced to accommodate the frontal screen 50, with a bracket receiving cavity 11 receiving the frontal screen 50. The first lateral screen 60 extends along the left hand side lateral edge 23 of the first table assembly 20 and the second lateral screen 60 extends along right hand side lateral edge 25 of the second table assembly 20; the frontal and first and second lateral screens collectively resulting into a T-shaped screen arrangement.

To assemble the arrangement shown in FIG.10, a first bracket frame member 31 mounts onto a first work surface 22 in a similar manner to that previously described for the first embodiment of the invention, wherein a clamping portion 32 mounts onto the rear edge 24 and a further clamping portion 33 mounts onto the left hand side lateral edge 23.

A second bracket frame member 31 mounts onto a second work surface 22 in a similar manner to that preciously described in the second embodiment of the invention, wherein a clamping portion 32 mounts onto the right hand side lateral edge 25 and a further clamping portion 33 mounts onto rear edge 24.

A second pivot joint member 39 mounts onto engagement portion 36B of the first bracket frame member 31 and third pivot joint member 39 mounts onto engagement portion 35B of second bracket frame member 31.

Referring to FIG.8 a first pivot joint member 39, traverses the screen and bracket receiving cavity 11 at opposite rear edges 24 of the first and second table assembly 20, interlinking the first and second bracket frame members 31, wherein engagement portion 39B mounts onto engagement portion 35B of first bracket frame member 31 and engagement portion 39C mounts onto engagement portion 36B of second bracket frame member 31.

In other embodiments alternative configurations of bracket assembly 30.3 may be utilised and may consist of removable or fixed elements.

As illustrated in FIG.10, the frontal screen 50 may flexibly, moveably, or rotatably mount the first pivot joint member 39 via a frontal guide portion 59, wherein screen surface 50A abuts the screen abutting portions 35A, 37A of the first bracket frame member 31 and screen surface 50B abuts the screen abutting portions 36A, 38A of second bracket frame member 31, articulating a pivot joint.

The first lateral screen 60 may flexibly, moveably, or rotatably mount onto a second pivot joint member 39 via a first lateral guide portion 69 secured by first securing member 34 with a screen surface 60A abutting screen abutting screen abutting portions 36A, 38A of the first bracket frame member 31, articulating a further pivot joint; the second lateral screen 60 may flexibly, moveably, or rotatably mounts onto a third pivot joint member 39 via a second lateral guide portion 69 secured by a second securing member 34 with a screen surface 60B abutting screen abutting portions 35A, 37A of the second bracket frame member 31, articulating an additional pivot joint. Referring to FIG.9 all screens are rotatably coupled by the linkage member 80, wherein its respective link portions 81, 82, 83 flexibly receive corresponding inner screen portions 51, 61 of the frontal screen 50 and first and second lateral screens 60, respectively.

Respective pivot joint portion 85, 86, 87 rotatably mate with corresponding pivot joint portions thus further articulating respectively the pivot joints.

As the function and operation of the current embodiment abides by the corresponding mechanism and motion principles of the forgoing embodiments, any exerted force may affects all three individual screens simultaneously.

As illustrated in FIG.10, at the exertion of force onto an outer screen corner all three screens simultaneously displace in an inwardly offsetting tilting motion with outer screen portions and moving downwards and inwards and inner screen portions and moving upwards and inwards as rotational and translational movements about the linkage member 80 until a corresponding end position has been reached.

If force F acts upon linkage member 80 when in a first starting position corresponding to that illustrated in FIG.1, the screens' movement reverses until a state of equilibrium has been achieved and the position illustrated in FIG.10 has been reached again.

The current embodiment allows for further configurative variations in combination with adjoining work stations, whereas the management of provisions shifts in favour of increased collective control and collaboration with the possibility to manage their own and up to three abutting work stations.

FIG.11 illustrates a fourth embodiment of a tiltable privacy desk-screen arrangement 100. Features which are similar or identical to those in the first embodiment are given similar or identical references and further detailed description has been omitted, for brevity. Here the tiltable privacy desk-screen arrangement comprises four interconnected screens.

In FIG.1 1, the work assembly comprises four desks or table assemblies 20 in diagonally configured arrangement of first and second table assembly 20. There is a gap, or bracket receiving cavity 12 between the rear edges 24 of the desks or table assemblies 20.

Here, the first and second bracket assemblies 30.2 are configured diagonally. The screen assembly 40.4 is configured in the shape of a cross, including first and second frontal screens 50, first and second lateral screens 60. A linkage member 90 interconnects the first and second frontal screens 50 and first and second lateral screens 60.

All elements are to be assembled in a similar fashion to the assembly methods relating to the previous embodiment of the tiltable privacy desk-screen arrangement 100.

Referring to FIG.11 a first starting position, similar to that shown in FIG.1 is shown. For practical purposes, the two additional table assemblies have been incorporated to complement front facing first table assembly 20 and diagonally aligned back facing second table assembly 20 in order to achieve a side-by-side arrangement of a two row work surface layout.

Adjacent work surfaces are spaced to accommodate screen and bracket receiving cavity 12 receiving frontal screens 50 between opposite parallel aligned rear edges 24 and first and second lateral screens 60 between respective parallel aligned lateral edges 23, 25.

To assemble the arrangement shown in FIG.11 a first bracket assembly 30.2 mounts onto a first work surface 22 and a second bracket assembly 30.2 mounts onto a second work surface 22.

Pivot joint members 39 engage with corresponding first and second bracket frame members 31 at corresponding engagement portions.

The first frontal screen 50 and first lateral 60 flexibly, moveably, or rotatably links to the first bracket assembly 30.2 and the second frontal screen 50 and second lateral screen 60 flexibly, moveably, or rotatably links to the second bracket assembly 30.2 in a similar manner as hereinbefore described.

All four screens are flexibly, moveably, or rotatably coupled via the linkage member 90. The linkage member 90 here comprises four link portions and is configured to receive four screens at abutting inner screen portions in a similar manner as previously described.

As the function and operation of the current embodiment abides by the corresponding mechanism and motion principles of the forgoing embodiments any exerted force affects all four individual screens simultaneously.

As illustrated in FIG.11, at the exertion of force F onto linkage member 90, incorporating link, lever and pivot functions similarly to previous embodiments, all four screens simultaneously displace in an outwardly offsetting tilting motion as they perform rotational and translational movements about the linkage member 90.

If force F acts upon either outer screen corner, the screens' movement reverses until a state of equilibrium has been achieved and inner screen edges have reached a jointly abutting position.

The current embodiment thus allows for further configurative variations in comparison to previously described embodiments should yet another differentiation in the degree of privacy and the distribution of individual influence be desired with the possibility to manage their own and up to three abutting work stations.

The above detailed exemplifications merely refer to a particular method the present disclosure may be configured thereof, entailing the specific simultaneous frontal and lateral rotational displacement and tilted positions of interlinked screens based on a select number of embodiments, thus leaving scope to the examination of alternative linkage methods and configurative variations of components.

It is therefore possible to provide a tiltable privacy desk-screen arrangement, comprising a bracket assembly; a plurality of screens engageable with the bracket assembly, a linkage member interconnecting the screens at adjacent upper screen corner portions to permit pivotable movement of each said screen when a force is applied to the linkage member.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention herein described and defined.

## Claims

1. A tiltable privacy desk-screen arrangement (100), comprising:
a bracket assembly (30.2; 30.3);
a plurality of neighbouring screens (50, 60) pivotably engageable with the bracket assembly (30.2; 30.3);
a guide portion (59, 69) associated with each screen (50, 60);
a linkage member (70; 80; 90) interconnecting the neighbouring screens (50, 60) at or adjacent to upper screen corner portions (57, 67) to permit pivotable movement of each said screen (50, 60) when a force (F) is applied to the linkage member (70, 80, 90);
**characterized in that** the pivotable movement of each said screen (50, 60) is along a linear or substantially linear axis defined by the guide portion (59, 69) of each screen (50, 60), and the tiltable privacy desk-screen arrangement (100) further comprising a securing member (34) associated with each guide portion (59, 69), engageable with the bracket assembly (30.2; 30.3) to retain the screens (50, 60) in position.

2. A tiltable privacy desk-screen arrangement (100) as claimed in claim 1, further comprising a desk (20) and wherein the bracket assembly (30.2; 30.3) is mounted to adjacent edges (23, 24, 25) of the said desk (20), and/or abuts the edges (23, 24, 25) of the desk (20).

3. A tiltable privacy desk-screen arrangement (100) as claimed in claims 1 or 2, wherein the guide portion (59, 69) is integrally formed as part of each screen (50, 60).

4. A tiltable privacy desk-screen arrangement (100) as claimed in any one of the preceding claims, wherein the linkage member (80) interconnects at least three screens (50, 60) or at least four screens (50, 60).

5. A tiltable privacy desk-screen arrangement (100) as claimed in any one of the preceding claims, wherein each said screen (50, 60) is connected to the linkage member (70; 80; 90) via a pivot joint portion (56, 66, 75, 76).

6. A tiltable privacy desk-screen arrangement (100) as claimed in claim 5, wherein each screen acts as a lever, so as to be capable of pivoting about the pivot joint portion (56, 66, 75, 76).

7. A tiltable privacy desk-screen arrangement (100) as claimed in any one of claims 1 to 6, further comprising a plurality of pivot joints (P1.1, P1.2, P2.1, P2.2), the pivot joints (P1.1, P1.2, P2.1, P2.2) facilitating the pivotable movement of the screens (50, 60).

8. A tiltable privacy desk-screen arrangement (100) as claimed in claim 7 when dependent on claim 5 or claim 6, wherein the exertion of force F on at least one pivot joint (P1.1, P1.2, P2.1, P2.2) of each screen (50, 60) causes displacement of said screen (50, 60) about its pivot joint portion (56, 66, 75, 76).

9. A tiltable privacy desk-screen arrangement (100) as claimed in claim 8, wherein the displacement of each screen (50, 60), simultaneously displaces every other interconnected screen (50, 60) about the pivot joint portion (56, 66, 75, 76) of each screen (50, 60).

10. A tiltable privacy desk-screen arrangement (100) as claimed in any one of the preceding claims, wherein a plurality of tilted positions of the individual screens (50, 60) may be obtained via said pivotable movement.

11. A tiltable privacy desk-screen arrangement (100) as claimed in claim 10, wherein said tilted positions encompasses at least one set of elevated and one set of lowered portions of said individual screens (50, 60).

12. A tiltable privacy desk-screen arrangement (100) as claimed in claim 10 or claim 11, wherein alternative tilted positions of the individual screens (50, 60) can be attained by re-exertion of force (F) being applied to the linkage member (70; 80; 90).

## Patentansprüche

1. Kippbare Sichtschutz-Schreibtischbildschirmanordnung (100), umfassend:
eine Halterungsbaugruppe (30.2; 30.3);
mehrere benachbarte Bildschirme (50, 60), die schwenkbar mit der Halterungsbaugruppe (30.2; 30.3) in Eingriff bringbar sind;
einen Führungsabschnitt (59, 69), der jedem Bildschirm (50, 60) zugeordnet ist;
ein Verbindungsglied (70; 80; 90), das die benachbarten Bildschirme (50, 60) an oder in der Nähe der oberen Bildschirmeckbereiche (57, 67) miteinander verbindet, um eine schwenkbare Bewegung jedes der Bildschirme (50, 60) zu ermöglichen, wenn eine Kraft (F) auf das Verbindungsglied (70, 80, 90) ausgeübt wird;
**dadurch gekennzeichnet, dass** die schwenkbare Bewegung jedes Bildschirms (50, 60) entlang einer linearen oder im Wesentlichen linearen Achse erfolgt, die durch den Führungsabschnitt (59, 69) jedes Bildschirms (50, 60) definiert ist und die kippbare Sichtschutz-Schreibtischbildschirmanordnung (100) ferner ein Sicherungselement (34) umfasst, das jedem Führungsabschnitt (59, 69) zugeordnet ist und mit der Halterungsbaugruppe (30.2; 30.3) in Eingriff bringbar ist, um die Bildschirme (50, 60) in Position zu halten.

2. Kippbare Sichtschutz-Schreibtischbildschirmanordnung (100) nach Anspruch 1, ferner umfassend einen Schreibtisch (20), wobei die Halterungsbaugruppe (30.2; 30.3) an benachbarten Rändern (23, 24, 25) des Schreibtischs (20) befestigt ist, und/oder an den Rändern (23, 24, 25) des Schreibtisches (20) anliegt.

3. Kippbare Sichtschutz-Schreibtischbildschirmanordnung (100) nach Anspruch 1 oder 2, wobei der Führungsabschnitt (59, 69) einstückig als Teil jedes Bildschirms (50, 60) ausgebildet ist.

4. Kippbare Sichtschutz-Schreibtischbildschirmanordnung (100) nach einem der vorhergehenden Ansprüche, wobei das Verbindungsglied (80) mindestens drei Bildschirme (50, 60) oder mindestens vier Bildschirme (50, 60) miteinander verbindet.

5. Kippbare Sichtschutz-Schreibtischbildschirmanordnung (100) nach einem der vorhergehenden Ansprüche, wobei jeder Bildschirm (50, 60) über einen Drehgelenkabschnitt (56, 66, 75, 76) mit dem Verbindungsglied (70; 80; 90) verbunden ist.

6. Kippbare Sichtschutz-Schreibtischbildschirmanordnung (100) nach Anspruch 5, wobei jeder Bildschirm als Hebel wirkt, um um den Drehgelenkabschnitt (56, 66, 75, 76) herum schwenken zu können.

7. Kippbare Sichtschutz-Schreibtischbildschirmanordnung (100) nach einem der Ansprüche 1 bis 6, ferner umfassend mehrere Drehgelenke (P1.1, P1.2, P2.1, P2.2), wobei die Drehgelenke (P1.1, P1.2, P2.1, P2.2), die schwenkbare Bewegung der Bildschirme (50, 60) erleichtern.

8. Kippbare Sichtschutz-Schreibtischbildschirmanordnung (100) nach Anspruch 7, wenn abhängig von Anspruch 5 oder Anspruch 6, wobei das Ausüben der Kraft F auf mindestens ein Drehgelenk (P1.1, P1.2, P2.1, P2.2) jedes Bildschirms (50, 60) ein Verschieben des Bildschirms (50, 60) um seinen Drehgelenkabschnitt (56, 66, 75, 76) bewirkt.

9. Kippbare Sichtschutz-Schreibtischbildschirmanordnung (100) nach Anspruch 8, wobei das Verschieben jedes Bildschirms (50, 60) gleichzeitig jeden anderen verbundenen Bildschirm (50, 60) um den Drehgelenkabschnitt (56, 66, 75, 76) jedes Bildschirms (50, 60) verschiebt.

10. Kippbare Sichtschutz-Schreibtischbildschirmanordnung (100) nach einem der vorhergehenden Ansprüche, wobei mehrere gekippte Positionen der einzelnen Bildschirme (50, 60) über die schwenkbare Bewegung erhalten werden können.

11. Kippbare Sichtschutz-Schreibtischbildschirmanordnung (100) nach Anspruch 10, wobei die gekippten Positionen mindestens einen Satz von erhöhten und einen Satz von abgesenkten Abschnitten der einzelnen Bildschirme (50, 60) umfassen.

12. Kippbare Sichtschutz-Schreibtischbildschirmanordnung (100) nach Anspruch 10 oder 11, wobei alternative Kipppositionen der einzelnen Bildschirme (50, 60) durch erneutes Aufbringen einer Kraft (F), die auf das Verbindungsglied (70; 80; 90) ausgeübt wird, erreicht werden können.

## Revendications

1. Agencement bureau-écran inclinable de confidentialité (100), comprenant :
un support (30.2 ; 30.3) ;
une pluralité d'écrans avoisinants (50, 60), pouvant être engagés de manière pivotante avec le support (30.2 ; 30.3) ;
une partie de guidage (59, 69), associée à chaque écran (50, 60) ;
un élément de liaison (70 ; 80 ; 90) reliant les écrans avoisinants (50, 60) aux parties de coin supérieures d'écran (57, 67) ou adjacentes à celles-ci pour permettre un mouvement de pivotement de chaque écran (50, 60) lorsqu'une force (F) est appliquée à l'élément de liaison (70, 80, 90) ;
**caractérisé en ce que** le mouvement pivotant de chacun desdits écrans (50, 60) se fait le long d'un axe linéaire ou sensiblement linéaire, défini par la partie de guidage (59, 69) de chaque écran (50, 60) et de l'agencement inclinable bureau-écran de confidentialité (100), comprenant en outre un élément de fixation (34) associé à chaque partie de guidage (59, 69), pouvant être engagée sur le support (30.2 ; 30.3) pour retenir les écrans (50, 60) en position.

2. Agencement bureau-écran inclinable de confidentialité (100) selon la revendication 1, comprenant en outre un bureau (20) et dans lequel le support (30.2 ; 30.3) est monté sur des bords (23, 24, 25) adjacents (20) dudit bureau et/ou bute contre les bords (23, 24, 25) du bureau (20).

3. Agencement bureau-écran inclinable de confidentialité (100) selon la revendication 1 ou 2, dans lequel la partie de guidage (59, 69) est intégralement formée en tant que partie de chaque écran (50, 60).

4. Agencement bureau-écran inclinable de confidentialité (100) selon l'une quelconque des revendications précédentes, dans lequel l'élément de liaison (80) relie au moins trois écrans (50, 60) ou au moins quatre écrans (50, 60).

5. Agencement bureau-écran inclinable de confidentialité (100) selon l'une quelconque des revendications précédentes, dans lequel chacun desdits écrans (50, 60) est relié à l'élément de liaison (70 ; 80 ; 90) par une partie d'articulation pivotante (56, 66, 75, 76).

6. Agencement bureau-écran inclinable de confidentialité (100) selon la revendication 5, dans lequel chaque écran agit comme un levier, de manière à pouvoir pivoter autour de la partie d'articulation pivotante (56, 66, 75, 76).

7. Agencement bureau-écran inclinable de confidentialité (100) selon l'une quelconque des revendications 1 à 6, comprenant en outre une pluralité d'articulations pivotantes (P1.1, P1.2, P2.1, P2.2), les articulations pivotantes (P1.1, P1.2, P2.1, P2.2) facilitant le mouvement de pivotement des écrans (50, 60).

8. Agencement bureau-écran inclinable de confidentialité (100) selon la revendication 7 quand elle dépend de la revendication 5 ou de la revendication 6, dans lequel le fait d'exercer la force F sur au moins une articulation pivotante (P1.1, P1.2, P2.1, P2.2) de chaque écran (50, 60) provoque le déplacement dudit écran (50, 60) autour de sa partie d'articulation pivotante (56, 66, 75, 76).

9. Agencement bureau-écran inclinable de confidentialité (100) selon la revendication 8, dans lequel le déplacement de chaque écran (50, 60) déplace simultanément chaque autre écran interconnecté (50, 60) autour de la partie d'articulation pivotante (56, 66, 75, 76) de chaque écran (50, 60).

10. Agencement bureau-écran inclinable de confidentialité (100) selon l'une quelconque des revendications précédentes, dans lequel une pluralité de positions inclinées des écrans individuels (50, 60) peuvent être obtenues par ledit mouvement pivotant.

11. Agencement bureau-écran inclinable de confidentialité (100) selon la revendication 10, dans lequel lesdites positions inclinées comprennent au moins un ensemble de parties élevées et un ensemble de parties abaissées desdits écrans individuels (50, 60).

12. Agencement bureau-écran inclinable de confidentialité (100) selon la revendication 10 ou la revendication 11, dans lequel d'autres positions inclinées des écrans individuels (50, 60) peuvent être obtenues en par un nouvel exercice de la force (F) sur l'élément de liaison (70 ; 80 ; 90).
